# EUROPEAN PATENT SPECIFICATION

(11) **EP 2 583 045 B1**
(45) Date of publication and mention of the grant of the patent: **23.04.2014**
(21) Application number: 11770194.6
(22) Date of filing: 17.06.2011
(51) Int. Cl.: F28D 9/00

(54) **PLATE HEAT EXCHANGER AND METHOD OF PRODUCING A PLATE HEAT EXCHANGER**
PLATTENWÄRMETAUSCHER UND VERFAHREN ZUR HERSTELLUNG EINES PLATTENWÄRMETAUSCHERS
ÉCHANGEUR DE CHALEUR À PLAQUES ET PROCÉDÉ DE PRODUCTION D'UN ÉCHANGEUR DE CHALEUR À PLAQUES

(30) Priority: 18.06.2010 SE 1050627
(43) Date of publication of application: 24.04.2013
(73) Proprietor: Alfa Laval Corporate AB, 221 00 Lund (SE)
(72) Inventor: BLOMGREN, Ralf, SE-239 34 Skanör (SE)
(74) Representative: Alfa Laval Attorneys
(86) International application number: PCT/SE2011/050763
(87) International publication number: WO 2011/159245

(56) References cited:
- DE-B3-102007 056 717
- US-B1- 6 397 940

## Description

### TECHNICAL FIELD

The present invention relates to a plate heat exchanger with a stack of heat transfer plates. It further relates to a method of producing a plate heat exchanger.

### BACKGROUND

Plate heat exchangers provided with a stack of heat transfer plates are utilized for exchange of heat between two or more fluids. The plates form plate interspaces adapted to be flowed through by the fluids. The plates in a stack may be welded together. The fluids may be e.g. gases, liquids, liquids containing solid matter, etc.

In some types of plate heat exchangers the plates are provided with port holes which form channels extending through the stack. In case of heat exchange between the two fluids, each channel communicates with every second plate interspace. A first fluid flows from a first channel through each alternate plate interspace over heat exchange surfaces of the plates to a second channel at an opposite side of the stack. A second fluid flows from a third channel through every other alternate plate interspace over heat exchange surfaces on opposite sides of the plates to a fourth channel at an opposite side of the stack.

In other types of plate heat exchangers, the fluids may be lead to the plate interspaces in a different manner than by means of port holes and channels. The fluids may for instance be led into the plate interspaces from the edges of the heat transfer plates by means of a suitable arrangement.

A main heat transfer portion of a heat transfer plate is provided with a pattern of corrugations. These corrugations may have many different forms but generally comprise elevated and depressed portions. The pattern of corrugations has a depth extending between two planes, a first outer plane and a second outer plane, both of which are parallel with a plane extending in the general direction of the plate. The plates are commonly manufactured from sheet metal, which may be provided with the pattern of corrugations in one or more pressing operations.

WO93/15369 discloses a welded plate heat exchanger,wherein the wherein the heat transfer plates in peripheral edge portions are welded together along an inner line and along an outer line. Ridges and grooves in the edge portions of the plates abut against each other and are dedicated for welding the plates together. Accordingly, weld joints perpendicular to a general plane of the plates run along the inner and outer lines and are centred in the ridges and grooves. In practice the weld joints are produced by a welding head which follows a pre-programmed track with a pressing device running along the bottom of a groove pressing together the two adjacent plates to be joined by a welding joint. Two relatively wide ridges and grooves are required in the edge portions of the plates to allow for the welding operation.

US 5327958 discloses a plate heat exchanger wherein plates are welded together at their peripheries along lateral ridges of the plates and along lateral flanges of the plates. The lateral ridges are arranged inside the lateral flanges. Several methods of welding the plates together are described. Most methods have in common that two plates first are welded together along the lateral ridges. The lateral flanges are welded together along the outer edges of the lateral flanges. According to one embodiment, all plates are welded together along the outer edges of the lateral flanges. This is made possible by arranging U-shaped bars along the outer edges between every second plate. The type of welding equipment used far welding the plates together is not mentioned, neither is the direction in which the weld joints are produced, In embodiments where an inner weld joint is produced before an outer weld joint, the inner weld joint is produced along the lateral edges, perpendicularly to a general plane of the plates.

US 6131648 discloses in Fig. 19 and related parts of the description heat transfer plates which have been welded together along their peripheries. How the weld joints have been produced is not discussed.

Further background art is reflected by patent document DE 10 2007 053 717 B3, which discloses a method for joining heat transfer plates.

### SUMMARY

An object of the present invention is to provide a plate heat exchanger having heat transfer plates which are welded together, in which plate heat exchanger basis for utilizing a large part of a total area of a heat transfer plate for heat transfer purposes is created.

According to an aspect of the invention, the object is achieved by a plate heat exchanger comprising a stack of heat transfer plates, wherein each heat transfer plate extends in a general plane and is provided with a main heat transfer portion with a corrugation pattern extending between a first outer plane on a first side of the general plane and a second outer plane on a second side of the general plane. The first and second outer planes are parallel with the general plane. Each heat transfer plate comprises an outer peripheral portion extending outside the main heat transfer portion and along a periphery of the heat transfer plate. The outer peripheral portion comprises an outer edge portion and an inner edge portion. The outer edge portion extends in the first outer plane and the inner edge portion extends in the second outer plane. In the stack the heat transfer plates in their outer peripheral portions abut against each other alternately along the outer edge portions and along the inner edge portions, and are welded together alternately along the outer edge portions and the inner edge portions. The heat transfer plates in the stack, along the outer edge portions abutting against each other and the inner edge portions abutting against each other, are welded together by melting material of the heat transfer plates closest to abutting faces of the edge portions abutting against each other by supplying welding energy in a direction substantially parallel with the general plane to produce weld joints between the heat transfer plates in the outer edge portions and the inner edge portions abutting against each other. Producing a weld joint in the inner edge portion distinguishes the invention from prior art.

Since all weld joints along the outer peripheral portions of the heat transfer plates in the stack are produced by supplying welding energy in the direction substantially parallel with the general plane, welding equipment used is directed towards the heat transfer plates from a region at a lateral side of the heat transfer plates seen in the direction of the general plane. Accordingly, no parts of the welding equipment such as pressing devices have to fit within any inner edge portion. Thus, the inner edge portions may be shaped relatively narrowly compared to corresponding portions of prior art plates which are welded together perpendicularly to the general plane of the plates. As a result, the above mentioned object is achieved, and a larger area of the heat transfer plates may be utilized for forming the main heat transfer portions and, in use, may be used for heat transfer purposes.

By welding the heat transfer plates along the outer peripheral portions it possible to stack all heat transfer plates into one stack and then weld the heat transfer plates together without the need to first welding every two heat transfer plates into a cassette and thereafter stack the welded cassettes into a stack and weld all the cassettes together. It also removes the need to have U-shaped bars to weld the heat transfer plates together.

The weld joints according to the present invention will have a wedge-like cross sectional shape with its narrow point directed towards an interior of the plate heat exchanger seen in a direction of the general plane. In a plate heat exchanger of the prior art, where at least inner weld joints are produced perpendicularly to the general plane, these weld joints will extend through two plates being welded together and have a rectangular or trapezium shaped cross section.

According to example embodiments the welding energy may be supplied by a laser beam and the heat transfer plates accordingly, may be welded together by means of laser welding. By utilizing laser welding it may be ensured that material from both of two heat transfer plates abutting against each other is melted to produce a weld joint.

According to example embodiments each weld joint, by means of which two heat transfer plates are welded together, may comprise only the material of two heat transfer plates abutting against each other. In this manner no additional welding material has to be added for producing any weld joint.

According to example embodiments each weld joint may have a length in the direction substantially parallel with the general plane of at least 80% of a thickness of one of the heat transfer plates. In this manner it may be ensured that each weld joint has a similar strength as each heat transfer plate.

According to example embodiments the outer peripheral portion of a heat transfer plate may comprise an interconnecting portion extending between the outer edge portion and the inner edge portion at an angle of about 45 degrees to the general plane. In this manner a strong design of the stack may be achieved as edge portions of interspaces between two plates are advantageously formed for withstanding high pressure fluids inside the stack.

According to example embodiments the heat transfer plate is formed with a radius of about 50% of the distance between the first and second outer planes in a transition between the outer edge portion and the interconnecting portion, and in a transition between the inner edge portion and the interconnecting portion. Also this design of the plates provides a strong design of the stack as the edge portions of interspaces between two plates are advantageously formed for withstanding high pressure fluids inside the stack.

The invention further relates to a method of producing a plate heat exchanger comprising a stack of heat transfer plates. Each heat transfer plate extends in a general plane and is provided with a main heat transfer portion with a corrugation pattern extending between a first outer plane on a first side of the general plane and a second outer plane on a second side of the general plane. The first and second outer planes are parallel with the general plane. Each heat transfer plate comprises an outer peripheral portion extending outside the main heat transfer portion and along a periphery of the heat transfer plate. The outer peripheral portion comprises an outer edge portion and an inner edge portion. The outer edge portion extends in the first outer plane and the inner edge portion extends in the second outer plane. The method comprises steps of welding together the heat transfer plates in the stack in the outer peripheral portions alternately along the outer edge portions which abut against each other and the inner edge portions which portions abut against each other, by melting material of the heat transfer plates closest to abutting faces of the edge portions abutting against each other by supplying welding energy in a direction substantially parallel with the general plane to produce weld joints between the heat transfer plates in the outer edge portions and the inner edge portions abutting against each other.

According to example embodiments the steps of welding may be performed by means of laser welding. Welding equipment utilizing a laser of YAG type may suitably be used. A welding head of the laser may use optical tracing for tracking along outer or inner edge portions of two plates to be welded together. The laser energy may be supplied to the laser head via optical fibre.

Further aspects of the method are mentioned in appended dependent method claims.

Further features of, and advantages with, the present invention will become apparent when studying the appended claims and the following description. Those skilled in the art will realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 illustrates a plate heat exchanger according to example embodiments,
Fig. 2 illustrates an outer heat transfer plate in a stack of a plate heat exchanger according to example embodiments,
Fig. 3 illustrates a cross section along line III-III in Fig. 2 through a corner portion of a stack of heat transfer plates according to example embodiments, and
Fig. 4 illustrates an enlarged portion of the cross section in Fig. 3 encircled by the line IV.

### DETAILED DESCRIPTION

The present invention will now be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout.

Well-known functions or constructions will not necessarily be described in detail for brevity and/or clarity.

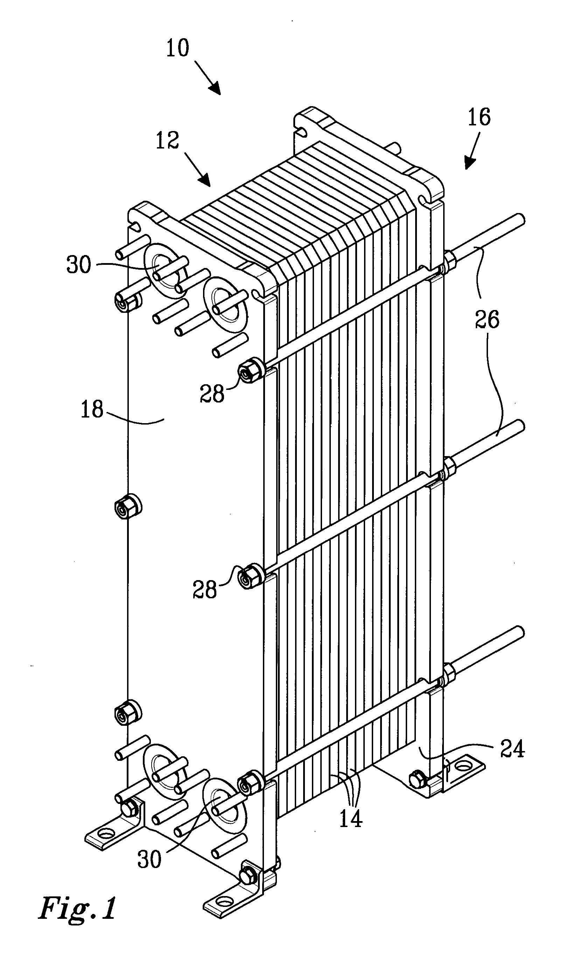

Fig. 1 illustrates a plate heat exchanger 10 according to example embodiments. The plate heat exchanger 10 comprises a stack 12 of heat transfer plates 14. The heat transfer plates 14 are of the same type and every second heat transfer plate 14 in the stack 12 is rotated 180 degrees in relation to the remaining heat transfer plates 14. The heat transfer plates 14 are welded together at least along outer peripheral portions of the heat transfer plates 14. The stack 12 is arranged in a frame 16 comprising a frame plate 18, bolts 26, nuts 28 and a pressure plate 24. The stack 12 of heat transfer plates 14 is clamped between the frame plate 18 and a pressure plate 24 by means the bolts 26 and nuts 28. The frame plate 18 is provided with four openings 30, each one leading to a port channel formed by four port holes (not-shown) of the plates 14 in the stack 12.

A first of two fluids flows into the heat exchanger 10 through one of the upper openings 30, through a corresponding port channel into every second plate interspace in the stack 12, and through a port channel and a lower of the openings 30 out from the plate heat exchanger 10. The second fluid flows suitably into the heat exchanger 10 through another of the lower openings 30 and corresponding port channel. The second fluid flows through the remaining plate interspaces in the stack 12 and out from the heat exchanger 10 through an upper port channel and an upper opening 30. The two fluids flow through the plate heat exchanger 10, as explained above, in so-called countercurrent flow. This is an example and other setups for achieving other flow directions are possible.

In an alternative form of heat exchanger according to example embodiments the heat transfer plates are not provided with port holes. Instead the fluids flow into and out from the plate interspaces via inlets provided along the sides of the stack 12 at outer peripheral portions of the heat transfer plates 14. In these example embodiments the peripheral portions of the heat transfer plates 14 are welded together along some of the sides of the stack 12, and some of the peripheral portions of the heat transfer plates 14 are open along the sides of the stack 12. Headers are provided for directing the fluids to, and from, the stack 12. In this type of plate heat exchanger the two fluids flow through the stack in so-called cross flow.

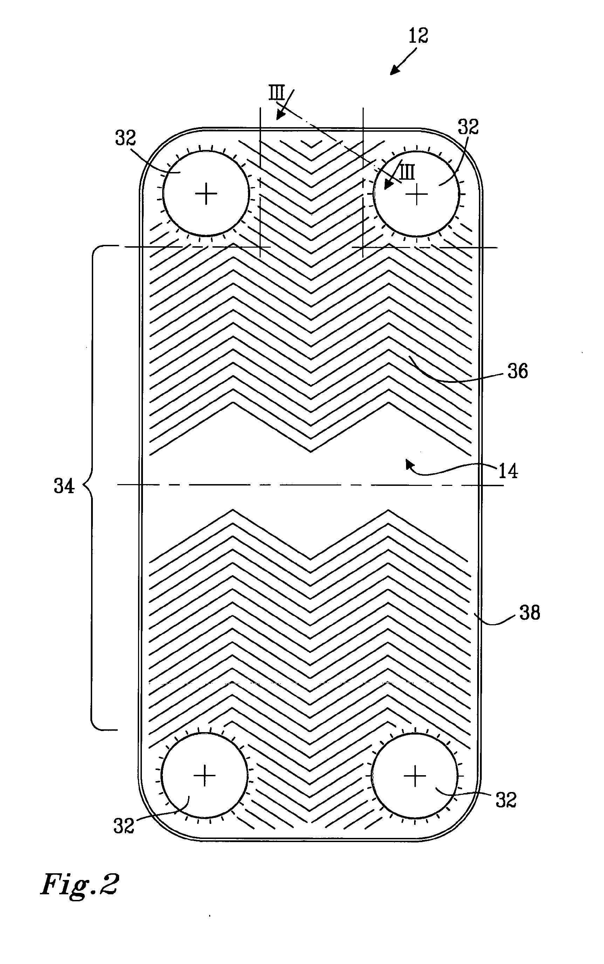

Fig. 2 illustrates an outer heat transfer plate 14 in a stack 12 of a plate heat exchanger according to example embodiments. The plate 14 is provided with four port holes 32 which form together with port holes in the other plates in the stack 12, four port channels through the stack 12. The plate 14 comprises a main heat transfer portion 34 which is provided with a corrugation pattern 36. The plate 14 further comprises an outer peripheral portion 38 extending around the periphery of the plate 14.

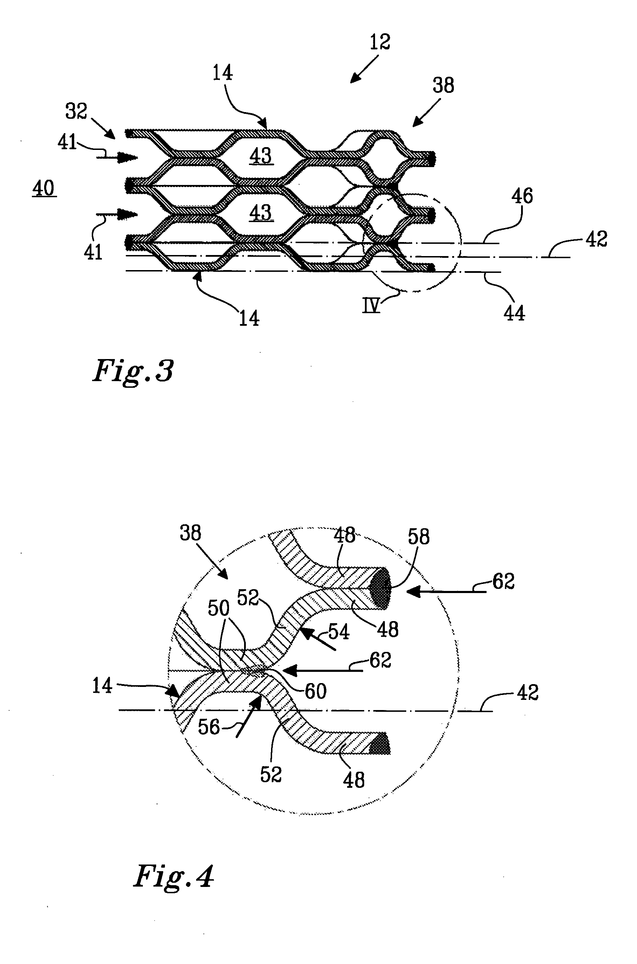

Fig. 3 illustrates a cross section along line III-III in Fig. 2 through a corner portion of a stack 12 of heat transfer plates 14 according to example embodiments. On the left hand side in Fig. 3 a port channel 40 formed by port holes 32 is illustrated. Arrows 41 illustrate a flow direction for a fluid from the port channel 40 into interspaces 43 between the plates 14. As illustrated in connection with one of the plates 14 in the stack 12, each plate 14 extends in a general plane 42. A corrugation pattern 26 of the plate 14 extends between a first outer plane 44 and a second outer plane 46. The first and second outer planes 44, 46 are parallel with the general plane 42. The heat transfer plates 14 are stacked such that every second plate 14 is placed with its first outer plane 44 facing in a first direction (in Fig. 3 illustrated as a downward direction) and the remaining plates 14 are placed with their first outer plane 44 facing in a second direction (in Fig. 3 illustrated as an upward direction). The heat transfer plates 14 in the stack 12 are welded together by means of laser welding along outer peripheral portions 38 of the plates 14.

Fig. 4 illustrates an enlarged portion of the cross section in Fig. 3 encircled by the line IV. The outer peripheral portions 38 of three heat transfer plates 14 are shown in Fig. 4. The outer peripheral portions 38 each have an outer edge portion 48, an inner edge portion 50 and extending therebetween an interconnecting portion 52. The interconnecting portion 52 extends between the outer and inner edge portions 48, 50 at an angle of about 45 degrees to the general plane 42.

Each heat transfer plate 14 is formed with a radius 54 of about 50% of the distance between the first and second outer planes 44, 46 (see Fig. 3) in a transition between the outer edge portion 48 and the interconnecting portion 52. Similarly, each plate 14 is formed with a radius 56 of about 50% of the distance between the first and second outer planes 44, 46 in a transition between the inner edge portion 50 and the interconnecting portion 52.

As mentioned above, the heat transfer plates 14 are welded together by means of laser welding in their outer peripheral portions 38. The plates 14 in the stack 12 abutting against each along their outer edge portions 48 are welded together, producing outer weld joints 58. Also, the plates 14 in the stack 12 abutting against each other along their inner edge portions 50 are welded together, producing inner weld joints 60. Both the inner and outer weld joints 58, 60 are formed by melting material of the plates 14 closest to abutting faces of the edge portions 48, 50 abutting against each other. The welding energy produced by laser welding equipment is obtained by means of a welding head directed towards the outer and inner edge portions 48, 50 in directions indicated by arrows 62, i.e. substantially parallel with the general plane 42. Supplying welding energy in the direction "substantially parallel" with the general plane 42 may mean that welding energy is supplied with an angle of ±15 degrees to the general plane 42. Alternatively, supplying welding energy in the direction substantially parallel with the general plane 42 means that welding energy is supplied with an angle of ±5 degrees to the general plane 42. Generally, a smaller angle to the general plane 42 renders a more stress-resistant weld. In the context of this disclosure of the plate heat exchanger 10, "parallel with" is the same as "parallel to".

Both weld joints 58, 60 have wedge-like cross sectional shapes with their narrow points directed towards an interior of the plate heat exchanger, as schematically illustrated in Fig. 4. The inner weld joint 60 is illustrated in size relative to the plates 14 more realistically than the outer weld joint 58. The inner weld joint 60 further illustrates the area of each plate 14 in which material of the plates 14 is melted to produce the weld joint. The outer and inner weld joints 58, 60 have a length in the direction substantially parallel with the general plane 42 of at least 80% of a thickness of one of the heat transfer plates 14.

The direction by which the welding energy is supplied with can be identified by cutting the plates 14 along the cross-section illustrated by Fig. 4 and by identifying the direction of the wedge-like, cross sectional shapes of the weld joints 58,60. Thus, supplying welding energy in a certain direction in relation to the general plane 42 provides a structural feature to the heat transfer plates 14.

Typically, the weld joints 58, 60 are substantially symmetrical about the general plane 42, which is a result of supplying the welding energy in the direction substantially parallel with the general plane 42. If the welding energy is supplied with an angle to the general plane 42, then the weld joints 58, 60 are inclined by the same angle in relation to the general plane 42. Often the welding energy is supplied in a direction that is parallel with the general plane 42, with the result that the weld joints 58, 60 are symmetrical about the general plane 42.

When the heat transfer plates 14 in the stack 12 are welded together, the different plates may be welded together essentially in any order. Since the welding energy is supplied in a direction parallel with the general plane 42, the laser welding head is directed towards two plates to be welded together from a region at a lateral side of the stack 12. Accordingly, all or several plates 14 of a stack 12 may be stacked and thereafter the plates 14 are welded together. The order in which the plates 14 are welded together may be chosen e.g. from a welding heat distribution perspective. However, thanks to the present invention inner weld joints no longer have to be produced before outer weld joints (as in some of the prior art). In particular, for three plates 14 anywhere in the stack 12, two of these heat transfer plates 14 may be welded together along the outer edge portions 48, thereafter one of these two heat transfer plates 14 may be welding together with the third heat transfer plate 14 along the inner edge portion 50.

Although the invention has been described with reference to example embodiments, many different alterations, modifications and the like will become apparent for those skilled in the art. For instance, the plates 14 may also be welded together around the port holes 32. Weld joints around the port holes 32 may be produced by means of laser welding where the welding energy is directed towards the plates 14 in a direction substantially parallel with the general plane 42.

It is to be understood that the foregoing is illustrative of various example embodiments and the invention is not to be limited to the specific embodiments disclosed and that modifications to the disclosed embodiments, combinations of features of disclosed embodiments as well as other embodiments are intended to be included within the scope of the appended claims.

## Claims

1. A plate heat exchanger (10) comprising a stack (12) of heat transfer plates (14), wherein
each heat transfer plate (14) extends in a general plane (42) and is provided with a main heat transfer portion (34) with a corrugation pattern (36) extending between a first outer plane (44) on a first side of said general plane (42) and a second outer plane (46) on a second side of said general plane (42), said first and second outer planes (44, 46) being parallel to said general plane (42), and wherein each heat transfer plate (14) comprises an outer peripheral portion (38) extending outside said main heat transfer portion (34) and along a periphery of said heat transfer plate (14), said outer peripheral portion (38) comprising an outer edge portion (48) and an inner edge portion (50), said outer edge portion (48) extending in said first outer plane (44) and said inner edge portion (50) extending in said second outer plane (46),
in which stack (12) said heat transfer plates (14) in said outer peripheral portions (38) abut against each other alternately along said outer edge portions (48) and along said inner edge portions (50), and are welded together alternately along said outer edge portions (48) and said inner edge portions (50), wherein
said heat transfer plates (14) in said stack (12), along said outer edge portions (48) abutting against each other and said inner edge portions (50) abutting against each other, are welded together by melting material of said heat transfer plates (14) closest to abutting faces of said edge portions (48, 50) abutting against each other by supplying welding energy in a direction (62) substantially parallel to said general plane (42) to produce weld joints (58, 60) between said heat transfer plates (14) in said outer edge portions (48) and said inner edge portions (50) abutting against each other.

2. The plate heat exchanger (10) according to claim 1, wherein said welding energy is supplied by a laser beam and said heat transfer plates (14) are welded together by means of laser welding.

3. The plate heat exchanger (10) according to any one of claims 1 and 2, wherein each of said weld joints (58, 60) by means of which two heat transfer plates (14) are welded together comprises only said material of two heat transfer plates (14) abutting against each other.

4. The plate heat exchanger (10) according to any one of the preceding claims, wherein each of said weld joints (58, 60) has a length in said direction (62) substantially parallel to said general plane (42) of at least 80% of a thickness of one of said heat transfer plates (14).

5. The plate heat exchanger (10) according to any one of the preceding claims, wherein said outer peripheral portion (38) of a plate (14) comprises an interconnecting portion (52) extending between said outer edge portion (48) and said inner edge portion (50) at an angle of about 45 degrees to said general plane (42).

6. The plate heat exchanger (10) according to claim 5, wherein said heat transfer plate (14) is formed with a radius of about 50% of the distance between said first and second outer planes (44, 46) in a transition between said outer edge portion (48) and said interconnecting portion (52), and in a transition between said inner edge portion (50) and said interconnecting portion (52).

7. The plate heat exchanger (10) according to any one of the preceding claims, wherein the weld joints (58, 60) are substantially symmetrical about the general plane (42).

8. The plate heat exchanger (10) according to any one of the preceding claims, wherein the weld joints (58, 60) have wedge-like cross sectional shapes with their narrow points directed towards an interior of the plate heat exchanger (10).

9. A method of producing a plate heat exchanger (10) comprising a stack (12) of heat transfer plates(14), wherein each heat transfer plate (14) extends in a general plane (42) and is provided with a main heat transfer portion (34) with a corrugation pattern (36) extending between a first outer plane (44) on a first side of said general plane (42) and a second outer plane (46) on a second side of said general plane (42), said first and second outer planes (44, 46) being parallel to said general plane (42), and wherein each heat transfer plate (14) comprises an outer peripheral portion (38) extending outside said main heat transfer portion (34) and along a periphery of said heat transfer plate (14), said outer peripheral portion (38) comprising an outer edge portion (48) and an inner edge portion (50), said outer edge portion (48) extending in said first outer plane (44) and said inner edge portion (50) extending in said second outer plane (46), said method comprising steps of:
welding together said heat transfer plates (14) in said stack (12) in said outer peripheral portions (38) alternately along said outer edge portions (48) which abut against each other and said inner edge portions (50) which abut against each other, by melting material of said heat transfer plates (14) closest to abutting faces of said edge portions (48, 50) abutting against each other by supplying welding energy in a direction (62) substantially parallel to said general plane (42) to produce weld joints (58, 60) between said heat transfer plates (14) in said outer edge portions (48) and said inner edge portions (50) abutting against each other.

10. The method according to claim 9, wherein said steps of welding is performed by means of laser welding.

11. The method according to any one of claims 9 and 10, wherein said steps of welding produce said weld joints (58, 60) by means of which two heat transfer plates (14) are welded together comprising only said material of two heat transfer plates (14) abutting against each other.

12. The method according to claim 11, wherein said produced weld joints (58, 60) have a length in said direction (62) substantially parallel to said general plane (42) of at least 80% of a thickness of one of said heat transfer plates (14).

13. The method according to claim any one of claims 9 - 12, comprising the steps of
first welding together two of said heat transfer plates (14) are along said outer edge portions (48), and
thereafter welding together one of said two heat transfer plates (14) with a third of said heat transfer plates (14) along said inner edge portions (50).

## Patentansprüche

1. Plattenwärmetauscher (10), der einen Stapel (12) von Wärmeübertragungsplatten (14) umfasst, wobei
jede Wärmeübertragungsplatte (14) sich in einer allgemeinen Ebene (42) erstreckt und mit einem Haupt-Wärmeübertragungsabschnitt (34) versehen ist, mit einem Wellungsmuster (36), das sich zwischen einer ersten äußeren Ebene (44) auf einer ersten Seite der allgemeinen Ebene (42) und einer zweiten äußeren Ebene (46) auf einer zweiten Seite der allgemeinen Ebene (42) erstreckt, wobei die erste und die zweite äußere Ebene (44, 46) parallel zu der allgemeinen Ebene (42) sind, und wobei jede Wärmeübertragungsplatte (14) einen äußeren Umfangsabschnitt (38) umfasst, der sich außerhalb des Haupt-Wärmeübertragungsabschnitts (34) und entlang eines Umfangs der Wärmeübertragungsplatte (14) erstreckt, wobei der äußere Umfangsabschnitt (38) einen äußeren Kantenabschnitt (48) und einen inneren Kantenabschnitt (50) umfasst, wobei sich der äußere Kantenabschnitt (48) in der ersten äußeren Ebene (44) erstreckt und sich der innere Kantenabschnitt (50) in der zweiten äußeren Ebene (46) erstreckt,
wobei in dem Stapel (12) die Wärmeübertragungsplatten (14) in den äußeren Umfangsabschnitten (38) abwechselnd entlang der äußeren Kantenabschnitte (48) und entlang der inneren Kantenabschnitte (50) aneinanderstoßen und abwechselnd entlang der äußeren Kantenabschnitte (48) und der inneren Kantenabschnitte (50) aneinandergeschweißt sind,
wobei die Wärmeübertragungsplatten (14) in dem Stapel (12), entlang der aneinanderstoßenden äußeren Kantenabschnitte (48) und der aneinanderstoßenden inneren Kantenabschnitte (50), zusammengeschweißt sind durch das Schmelzen von Werkstoff der Wärmeübertragungsplatten (14) nächst den Stoßflächen der aneinanderstoßenden Kantenabschnitte (48, 50) durch das Zuführen von Schweißenergie in einer Richtung (62), im Wesentlichen parallel zu der allgemeinen Ebene (42), um Schweißverbindungen (58, 60) zwischen den Wärmeübertragungsplatten (14) in den äußeren Kantenabschnitten (48) und den inneren Kantenabschnitten (50), die aneinanderstoßen, zu erzeugen.

2. Plattenwärmetauscher (10) nach Anspruch 1, wobei die Schweißenergie durch einen Laserstrahl zugeführt wird und die Wärmeübertragungsplatten (14) mit Hilfe des Laserschweißens aneinandergeschweißt werden.

3. Plattenwärmetauscher (10) nach einem der Ansprüche 1 und 2, wobei jede der Schweißverbindungen (58, 60), mit deren Hilfe zwei Wärmeübertragungsplatten (14) aneinandergeschweißt sind, nur den Werkstoff der zwei aneinanderstoßenden Wärmeübertragungsplatten (14) umfasst.

4. Plattenwärmetauscher (10) nach einem der vorhergehenden Ansprüche, wobei jede der Schweißverbindungen (58, 60) in der Richtung (62), im Wesentlichen parallel zu der allgemeinen Ebene (42), eine Länge von wenigstens 80 % einer Dicke einer der Wärmeübertragungsplatten (14) hat.

5. Plattenwärmetauscher (10) nach einem der vorhergehenden Ansprüche, wobei der äußere Umfangsabschnitt (38) einer Platte (14) einen Verbindungsabschnitt (52) umfasst, der sich zwischen dem äußeren Kantenabschnitt (48) und dem inneren Kantenabschnitt (50) in einem Winkel von etwa 45 Grad zu der allgemeinen Ebene (42) erstreckt.

6. Plattenwärmetauscher (10) nach Anspruch 5, wobei die Wärmeübertragungsplatte (14) mit einem Radius von etwa 50 % des Abstandes zwischen der ersten und der zweiten äußeren Ebene (44, 46) in einem Übergang zwischen dem äußeren Kantenabschnitt (48) und dem Verbindungsabschnitt (52) und in einem Übergang zwischen dem inneren Kantenabschnitt (50) und dem Verbindungsabschnitt (52) geformt ist.

7. Plattenwärmetauscher (10) nach einem der vorhergehenden Ansprüche, wobei die Schweißverbindungen (58, 60) im Wesentlichen symmetrisch um die allgemeine Ebene (42) sind.

8. Plattenwärmetauscher (10) nach einem der vorhergehenden Ansprüche, wobei die Schweißverbindungen (58, 60) keilartige Querschnittsformen haben, wobei deren schmale Spitzen zu einem Inneren des Plattenwärmetauschers (10) hin gerichtet sind.

9. Verfahren zur Herstellung eines Plattenwärmetauschers (10), der einen Stapel (12) von Wärmeübertragungsplatten (14) umfasst, wobei jede Wärmeübertragungsplatte (14) sich in einer allgemeinen Ebene (42) erstreckt und mit einem Haupt-Wärmeübertragungsabschnitt (34) versehen ist, mit einem Wellungsmuster (36), das sich zwischen einer ersten äußeren Ebene (44) auf einer ersten Seite der allgemeinen Ebene (42) und einer zweiten äußeren Ebene (46) auf einer zweiten Seite der allgemeinen Ebene (42) erstreckt, wobei die erste und die zweite äußere Ebene (44, 46) parallel zu der allgemeinen Ebene (42) sind, und wobei jede Wärmeübertragungsplatte (14) einen äußeren Umfangsabschnitt (38) umfasst, der sich außerhalb des Haupt-Wärmeübertragungsabschnitts (34) und entlang eines Umfangs der Wärmeübertragungsplatte (14) erstreckt, wobei der äußere Umfangsabschnitt (38) einen äußeren Kantenabschnitt (48) und einen inneren Kantenabschnitt (50) umfasst, wobei sich der äußere Kantenabschnitt (48) in der ersten äußeren Ebene (44) erstreckt und sich der innere Kantenabschnitt (50) in der zweiten äußeren Ebene (46) erstreckt,
wobei das Verfahren die folgenden Schritte umfasst:
das Aneinanderschweißen der Wärmeübertragungsplatten (14) in dem Stapel (12) in den äußeren Umfangsabschnitten (38) abwechselnd entlang der aneinanderstoßenden äußeren Kantenabschnitte (48) und der aneinanderstoßenden inneren Kantenabschnitte (50), durch das Schmelzen von Werkstoff der Wärmeübertragungsplatten (14) nächst den Stoßflächen der aneinanderstoßenden Kantenabschnitte (48, 50) durch das Zuführen von Schweißenergie in einer Richtung (62), im Wesentlichen parallel zu der allgemeinen Ebene (42), um Schweißverbindungen (58, 60) zwischen den Wärmeübertragungsplatten (14) in den äußeren Kantenabschnitten (48) und den inneren Kantenabschnitten (50), die aneinanderstoßen, zu erzeugen.

10. Verfahren nach Anspruch 9, wobei der Schritte des Schweißens mit Hilfe des Laserschweißens durchgeführt wird.

11. Verfahren nach einem der Ansprüche 9 und 10, wobei die Schritte des Schweißens die Schweißverbindungen (58, 60) erzeugen, mit deren Hilfe zwei Wärmeübertragungsplatten (14) aneinandergeschweißt werden, wobei sie nur den Werkstoff der zwei aneinanderstoßenden Wärmeübertragungsplatten (14) umfassen.

12. Verfahren nach Anspruch 11, wobei die erzeugten Schweißverbindungen (58, 60) in der Richtung (62), im Wesentlichen parallel zu der allgemeinen Ebene (42), eine Länge von wenigstens 80 % einer Dicke einer der Wärmeübertragungsplatten (14) haben.

13. Verfahren nach einem der Ansprüche 9 bis 12, das die folgenden Schritte umfasst:
zuerst das Aneinanderschweißen von zweien der Wärmeübertragungsplatten (14) entlang der äußeren Kantenabschnitte (48) und
danach das Aneinanderschweißen einer der zwei Wärmeübertragungsplatten (14) mit einer dritten der Wärmeübertragungsplatten (14) entlang der inneren Kantenabschnitte (50).

## Revendications

1. Echangeur de chaleur à plaques (10), comprenant une pile (12) de plaques de transfert de chaleur (14), dans lequel :
chaque plaque de transfert de chaleur (14) s'étend dans un plan général (42) et comporte une partie principale de transfert de chaleur (34), avec un motif à ondulations (36) s'étendant entre un premier plan externe (44) sur un premier côté dudit plan général (42), et un deuxième plan externe (46) sur un deuxième côté dudit plan général (42), lesdits premier et deuxième plans externes (44, 46) étant parallèles audit plan général (42), et dans lequel chaque plaque de transfert de chaleur (14) comprend une partie périphérique externe (38), s'étendant vers l'extérieur de ladite partie principale de transfert de chaleur (34) et le long d'une périphérie de ladite plaque de transfert de chaleur (14), ladite partie périphérique externe (38) comprenant une partie de bordure externe (48) et une partie de bordure interne (50), ladite partie de bordure externe (48) s'étendant dans ledit premier plan externe (44) et ladite partie de bordure interne (50) s'étendant dans ledit deuxième plan externe (46) ;
dans lequel, dans ladite pile (12), lesdites plaques de transfert de chaleur (14) dans lesdites parties périphériques externes (38) butent les unes contre les autres, de manière alternée le long desdites parties de bordure externes (48) et le long desdites parties de bordure internes (50) et sont soudées les unes aux autres, de manière alternée le long desdites parties de bordure externes (48) et desdites parties de bordure internes (50) ;
dans lequel lesdites plaques de transfert de chaleur (14) dans ladite pile (12), le long desdites parties de bordure externes (48) butent les unes contre les autres, lesdites parties de bordure internes (50) butant l'une contre l'autre, sont soudées les unes aux autres par la fusion du matériau desdites plaques de transfert de chaleur (14) les plus proches des faces de butée desdites parties de bordure (48, 50) butant l'une contre l'autres, en appliquant une énergie de soudage dans une direction (62) essentiellement parallèle audit plan général (42), pour produire des joints de soudure (58, 60) entre lesdites plaques de transfert de chaleur (14) dans lesdites parties de bordure externes (48) et lesdites parties de bordure internes (50) butant les unes contre les autres.

2. Echangeur de chaleur à plaques (10) selon la revendication 1, dans lequel ladite énergie de soudage est fournie par un faisceau laser, lesdites plaques de transfert de chaleur (14) étant soudées les unes aux autres par un soudage par laser.

3. Echangeur de chaleur à plaques (10) selon l'une quelconque des revendications 1 et 2, dans lequel chacun desdits joints de soudure (58, 60), par l'intermédiaire desquels deux plaques de transfert de chaleur (14) sont soudées l'une à l'autre, comprend uniquement ledit matériau de deux plaques de transfert de chaleur (14) butant l'une contre l'autre.

4. Echangeur de chaleur à plaques (10) selon l'une quelconque des revendications précédentes, dans lequel chacun desdits joints de soudure (58, 60) a une longueur dans ladite direction (62) essentiellement parallèle audit plan général (42) représentant au moins 80% d'une épaisseur de l'une desdites plaques de transfert de chaleur (14).

5. Echangeur de chaleur à plaques (10) selon l'une quelconque des revendications précédentes, dans lequel ladite partie périphérique externe (38) d'une plaque (14) comprend une partie d'interconnexion (52), s'étendant entre ladite partie de bordure externe (48) et ladite partie de bordure interne (50) à un angle d'environ 45 degrés par rapport audit plan général (42).

6. Echangeur de chaleur à plaques (10) selon la revendication 5, dans lequel ladite plaque de transfert de chaleur (14) est formée avec un rayon représentant environ 50% de la distance entre lesdits premier et deuxième plans externes (44, 46), dans une transition entre ladite partie de bordure externe (48) et ladite partie d'interconnexion (52), et dans une transition entre ladite partie de bordure interne (50) et ladite partie d'interconnexion (52).

7. Echangeur de chaleur à plaques (10) selon l'une quelconque des revendications précédentes, dans lequel les joints de soudure (58, 60) sont essentiellement symétriques par rapport au plan général (42).

8. Echangeur de chaleur à plaques (10) selon l'une quelconque des revendications précédentes, dans lequel les joints de soudure (58, 60) ont des formes de section transversale en forme de coin, leurs pointes étroites étant dirigées vers un intérieur de l'échangeur de chaleur à plaques (10).

9. Procédé de production d'un échangeur de chaleur à plaques (10), comprenant une pile (12) de plaques de transfert de chaleur (14), chaque plaque de transfert de chaleur (14) s'étendant dans un plan général (42) et comportant une partie principale de transfert de chaleur (34), avec un motif à ondulations (36) s'étendant entre un premier plan externe (44) sur un premier côté dudit plan général (42), et un deuxième plan externe (46) sur un deuxième côté dudit plan général (42), lesdits premier et deuxième plans externes (44, 46) étant parallèles audit plan général (42), et dans lequel chaque plaque de transfert de chaleur (14) comprend une partie périphérique externe (38), s'étendant vers l'extérieur de ladite partie principale de transfert de chaleur (34) et le long d'une périphérie de ladite plaque de transfert de chaleur (14), ladite partie périphérique externe (38) comprenant une partie de bordure externe (48) et une partie de bordure interne (50), ladite partie de bordure externe (48) s'étendant dans ledit premier plan externe (44) et ladite partie de bordure interne (50) s'étendant dans ledit deuxième plan externe (46) ;
ledit procédé comprenant les étapes ci-dessous :
assemblage par soudage desdites plaques de transfert de chaleur (14) dans ladite pile (12) dans lesdites parties périphériques externes (38), de manière alternée le long desdites parties de bordure externes (48) butant l'une contre l'autre, et desdites parties de bordure internes (50) butant l'une contre l'autre, par la fusion du matériau desdites plaques de transfert de chaleur (14) les plus proches des faces de butée desdites parties de bordure (48, 50), butant l'une contre l'autre, en appliquant une énergie de soudage dans une direction (62) essentiellement parallèle audit plan général (42), pour produire des joints de soudure (58, 60) entre lesdites plaques de transfert de chaleur (14) dans lesdites parties de bordure externes (48) et lesdites parties de bordure internes (50) butant les unes contre les autres.

10. Procédé selon la revendication 9, dans lequel ladite étape de soudage est exécutée par l'intermédiaire d'un soudage par laser.

11. Procédé selon l'une quelconque des revendications 9 et 10, dans lequel ladite étape de soudage produit lesdits joints de soudure (58, 60), par l'intermédiaire desquels deux plaques de transfert de chaleur (14) sont soudées l'une à l'autre, comprenant uniquement ledit matériau de deux plaques de transfert de chaleur (14) butant l'une contre l'autre.

12. Procédé selon la revendication 11, dans lequel lesdits joints de soudure produits (58, 60) ont une longueur dans ladite direction (62) essentiellement parallèle audit plan général (42) représentant au moins 80% d'une épaisseur de l'une desdites plaques de transfert de chaleur (14).

13. Procédé selon l'une quelconque des revendications 9 à 12, comprenant les étapes ci-dessous :
en premier lieu, assemblage par soudage de deux desdites plaques de transfert de chaleur (14) le long desdites parties de bordure externes (48) ; et
ensuite, assemblage par soudage de l'une desdites deux plaques de transfert de chaleur (14) et d'une troisième desdites plaques de transfert de chaleur (14) le long desdites parties de bordure internes (50).
